# EUROPÄISCHE PATENTSCHRIFT

(11) **EP 1 660 743 B1**
(45) Veröffentlichungstag und Bekanntmachung des Hinweises auf die Patenterteilung: **14.02.2007**
(21) Anmeldenummer: 04764441.4
(22) Anmeldetag: 25.08.2004
(51) Int. Cl.: E05B 65/12, B60R 7/04

(54) **SICHERHEITSVERRIEGELUNGSVORRICHTUNG FÜR EIN BEHÄLTNIS IN EINEM FAHRZEUG**
SAFETY LOCKING DEVICE FOR A CONTAINER IN A VEHICLE
DISPOSITIF DE VERROUILLAGE DE SECURITE DESTINE A UN CONTENANT DANS UN VEHICULE

(30) Priorität: 04.09.2003 DE 10340673
(43) Veröffentlichungstag der Anmeldung: 31.05.2006
(73) Patentinhaber: fischer automotive systems GmbH, 72160 Horb (DE)
(72) Erfinder: LEOPOLD, Gunter, 72270 Baiersbronn (DE)
(74) Vertreter: Suchy, Ulrich Johannes
(86) Internationale Anmeldenummer: PCT/EP2004/009464
(87) Internationale Veröffentlichungsnummer: WO 2005/028792

(56) Entgegenhaltungen:
- WO-A-03/104591
- DE-A- 4 130 847
- DE-A- 10 121 681
- US-A- 5 052 728

## Beschreibung

Die Erfindung betrifft eine Sicherheitsverriegelungsmechanik für ein Behältnis in einem Fahrzeug mit den Merkmalen des Oberbegriffs des Anspruchs 1.

Eine Einrichtung nach dem Oberbegriff des Anspruchs 1 ist aus DE 4 130 847 bekannt.

Die Sicherheitsverrieglungsmechanik ist insbesondere für einen Kraftwagen vorgesehen. Ein Behältnis kann bspw. ein Ablagefach mit einem schubladenartig ausfahrbaren Einschub sein. Ebenso lässt sich ein Deckel eines Ablage- oder Handschuhfachs oder an Stelle eines Behältnisses bspw. ein Schieber eines Getränkehalters mit der erfindungsgemäßen Sicherheitsverriegelungsmechanik im Falle eines Unfalls in einer geschlossenen Stellung verriegeln.

Sicherheitsverriegelungsmechaniken sind an sich bekannt. Sie haben die Aufgabe, ein Öffnen eines Behältnisses, insbesondere ein Ausfahren eines Schiebers bei einem Unfall, insbesondere bei einem Front- und/oder Heckaufprall, zu verhindern. Es soll vermieden werden, dass Schieber, Deckel oder dgl. Teile in einen Fahrgastraum vorstehen und dadurch eine Verletzungsgefahr für Insassen bilden. Außerdem soll vermieden werden, dass durch Öffnen eines Behältnisses im Behältnis aufbewahrte Gegenstände in den Innenraum des Fahrzeuges gelangen, dort umherfliegen und eine Verletzungsgefahr bilden.

Eine derartige Sicherheitsverriegelungsmechanik ist in der EP 610 882 A2 offenbart. Die genannte Druckschrift offenbart ein Behältnis mit einem schubladenartig ausfahrbaren Einschub, der mit einem Federelement in eine offene Stellung ausgeschoben wird. Eine sog. Push-Push-Verriegelungsmechanik hält den Einschub gegen die Kraft des Federelements in einer eingeschobenen, geschlossenen Stellung. Die Verriegelungsmechanik weist ein hakenförmiges, federbeaufschlagtes Verriegelungselement auf. Zur Weiterbildung der Verriegelungsmechanik zu einer Sicherheitsverriegelungsmechanik sieht die genannte Druckschrift vor, das hakenförmige Verriegelungselement durch Formgebung oder ein exzentrisch angeordnetes Gewicht so zu gestalten, dass eine bei einem Unfall auf das Verriegelungselement einwirkende Beschleunigung oder Verzögerung das Verriegelungselement entgegen einer Federkraft des Federelements beaufschlagt. Dadurch wird verhindert, dass das Verriegelungselement durch eine bei einem Unfall wirkende Beschleunigung oder Verzögerung außer Eingriff vom Einschub gelangt.

Eine andere Sicherheitsverriegelungsmechanik offenbart die US-PS 5 052 728. Dort wird ein ebenfalls hakenförmiges Verriegelungselement einer Push-Push-Verriegelungsmechanik durch eine verschiebbar geführte Masse an einem Schwenken und damit an einem außer Eingriff Gelangen von einem schubladenartig ausfahrbaren Fach gehindert, wobei sich die Masse im Falle eines Unfalls gegen die Kraft eines Federelements bewegt.

Beiden bekannten Sicherheitsverriegelungsmechaniken ist also gemein, dass an der Push-Push-Verriegelungsmechanik selbst angesetzt wird. Allerdings verriegeln derartige Sicherheitsverriegelungsmechaniken nicht zuverlässig, wenn beispielsweise in Folge eines Unfalls, an dem mehrere Fahrzeuge beteiligt sind, eine Serie unterschiedlich starker Beschleunigungen und Verzögerungen auftritt.

Der Erfindung liegt daher die Aufgabe zugrunde, eine Sicherheitsverriegelungsmechanik der vorstehend erläuterten Art vorzuschlagen, deren Sicherheit gegen das Öffnen eines Behältnisses durch einen Unfall erhöht ist.

Diese Aufgabe wird erfindungsgemäß durch die Merkmale des Anspruchs 1 gelöst. Die erfindungsgemäße Sicherheitsverriegelungsmechanik weist eine Masse auf, die mit einer Führung aus einer Grundstellung in eine ausgelenkte Stellung beweglich geführt ist. Die Führung kann eine gerade oder nicht gerade Schiebeführung sein. Ebenfalls ist eine Schwenklagerung möglich, die die Masse auf einer Kreisbogenbahn beweglich führt. Des Weiteren weist die erfindungsgemäße Sicherheitsverriegelungsmechanik eine Einrichtung auf, die die Masse in einer Grundstellung hält, wenn keine Beschleunigung oder Verzögerung in Auslenkungsrichtung auf die Masse einwirkt. Diese Einrichtung kann bspw. ein Federelement aufweisen, das die Masse an einem Anschlag hält, wenn keine Beschleunigung/Verzögerung auf die Masse einwirkt. Eine BeschleunigungNerzögerung kann die Masse gegen die Kraft des Federelements in einer Richtung bewegen, d.h. auslenken. Auch ist es möglich, die Masse mit einem Federelement in einer Grundstellung zu halten, in der das Federelement entspannt ist. Eine Auslenkung der Masse durch eine BeschleunigungNerzögerung ist in zwei einander entgegengesetzten Richtungen, eventuell auch in einer oder mehreren Querrichtungen, möglich.

Des Weiteren sieht die Erfindung eine Rasteinrichtung vor, die die Masse in der ausgelenkten Stellung hält, wenn die Masse durch eine auf sie einwirkende Beschleunigung oder Verzögerung in die ausgelenkte Stellung bewegt worden ist. In dieser Stellung hält die Masse das Behältnis verschlossen. Dabei kann die Masse das Behältnis unmittelbar oder auch mittelbar über bspw. ein Verriegelungselement geschlossen halten. Die Rasteinrichtung hält das Behältnis auch verschlossen, wenn die Beschleunigung/Verzögerung nicht mehr wirkt. Das Behältnis wird damit durch weitere, auf das Behältnis wirkende Trägkeitskräfte, wie sie während eines Unfalls wirken, nicht geöffnet.

Allerdings kann es nach einem Unfall wichtig sein, dass das Behältnis geöffnet wird, beispielsweise um ein sich im Behältnis befindliches Mobiltelefon zum Verständigen von Rettungskräften zu entnehmen. Die Erfindung sieht daher außerdem eine durch Überdrücken des Behältnisses wirkende Rückstelleinrichtung vor, die die Masse wieder zurück in die Grundstellung lenkt, und damit das Behältnis zum Öffnen freigibt. Wichtig ist dabei, dass das Überdrücken des Behältnisses nicht durch Beschleunigungskräfte, wie sie während eines Unfalls wirken, sondern nur durch den Bediener erfolgen kann. Dies kann beispielsweise dadurch erfolgen, dass zum Überdrücken des Behältnisses eine Feder, das Behältnis oder das Gehäuse elastisch und/oder plastisch verformt werden müssen, wobei die entsprechenden Bauteile so ausgelegt sind, dass die Kräfte deutlich größer sind, als die Beschleunigungskräfte. Da die Beschleunigungskräfte jedoch beispielsweise durch Gegenstände im Behältnis recht hoch sein können und damit zwangsläufig die Kräfte zum Überdrücken noch höher sein müssten, sieht eine bevorzugte Ausführung der Erfindung vor, dass dem Überdrücken ein Dämpfungselement entgegenwirkt. Während bei großen, kurzen Beschleunigungen, wie sie bei Unfällen auftreten, ein Dämpfungselement hohe Gegenkräfte bewirkt, erfordert es bei einer langsamen Bewegung nur geringe Kräfte vom Bediener. Begünstigt wird dies durch eine progressiv ansteigende Kennlinie des Dämpfungselements, d. h. bei steigender Geschwindigkeit wird eine überproportional steigende dämpfende Kraft erzeugt.

Eine Ausgestaltung der Erfindung sieht vor, dass die Masse in zwei entgegengesetzte Richtungen auslenkbar ist, in jeder der beiden ausgelenkten Stellungen von der Rasteinrichtung gehalten wird und in jeder ausgelenkten Stellung das Behältnis verschlossen hält. Die beiden Richtungen sind vorzugsweise so gewählt, dass eine Beschleunigung oder Verzögerung in Längsrichtung des Fahrzeugs die Masse auslenkt. Die Sicherheitsverriegelungsmechanik ist dadurch bei einem Front- oder Heckaufprall wirksam. Soll die Sicherheitsverriegelungsmechanik auch für einen Seitenaufprall wirksam sein, kann eine Längs- und Querführung oder eine Führung der Masse mit Freiheitsgraden in Längs- und Querrichtung oder eine zweite Sicherheitsverriegelungsmechanik für die Querrichtung vorgesehen werden. Die Masse kann in jeder ausgelenkten Stellung von einer Rasteinrichtung gehalten werden oder es wird eine Rasteinrichtung vorgesehen, die die Masse in jeder ausgelenkten Stellung hält. Gleichermaßen weist eine solche Ausgestaltung der Erfindung eine Rückstelleinrichtung auf, die durch Überdrücken des Behältnisses die Masse aus jeglicher ausgelenkter Stellung wieder in die Grundstellung lenkt.

Bei der Ausgestaltung der Erfindung ist zu berücksichtigen, was passiert, wenn das Behältnis offen ist und durch einen Unfall hohe Beschleunigungskräfte auf das Behältnis wirken, so dass es sich beispielsweise entgegen der Kraft einer Rollfeder in Richtung der geschlossenen Stellung bewegt. In diesem Fall hat die Masse bereits vor Erreichen der geschlossenen Stellung des Behältnisses ihre ausgelenkte Stellung erreicht. Bei einer Ausgestaltung der Erfindung, bei der beispielsweise eine Haltekralle der Masse in eine Hinterschneidung des Behältnisses eingreift (oder umgekehrt), kann es somit passieren, dass eine vor der Hinterschneidung liegende Fläche gegen die Haltekralle prallt. Dies hätte zur Folge, dass die Schließbewegung gestoppt würde und das Behältnis unverriegelt wieder öffnen würde. Dies birgt jedoch die oben genannten Gefahren. In einer bevorzugten Ausführung der Erfindung weist die Sicherheitsverriegelungsmechanik eine zweite Rückstelleinrichtung auf. Diese stellt die Masse durch Bewegen des Behältnisses von der offenen in die geschlossenen Stellung zurück in die Grundstellung. Entsprechend kann die geschlossene Stellung erreicht werden und das Behältnis wird wie bei einem vom Bediener durchgeführten Schließvorgang verriegelt, beispielsweise durch eine Push-Push-Verriegelungsmechanik. Alternativ wäre es denkbar, dass die Hinterschneidung zur Verriegelung des Behältnisses durch die Masse von einer federnden Klappe oder dgl. gebildet wird, dass also das Behältnis auch bei ausgelenkter Masse schließbar bleibt und verriegelt.

Die Erfindung wird nachfolgend anhand eines in der Zeichnung dargestellten Ausführungsbeispiels näher erläutert. Es zeigen:
- Figur 1: einen Ascher mit einer erfindungsgemäßen Sicherheitsverriegelungsmechanik in einer perspektivischen Darstellung;
- Figur 2 und 3: perspektivische Schnittdarstellungen des geschlossenen Aschers mit der Sicherheitsverriegelungsmechanik in Grundstellung;
- Figur 4: eine perspektivische Schnittdarstellungen des Aschers nach einem Unfall mit der Sicherheitsverriegelungsmechanik in ausgelenkter Stellung; und
- Figur 5: eine perspektivische Schnittdarstellungen des Aschers nach einem Unfall mit der Sicherheitsverriegelungsmechanik während des Rückstellvorgangs.

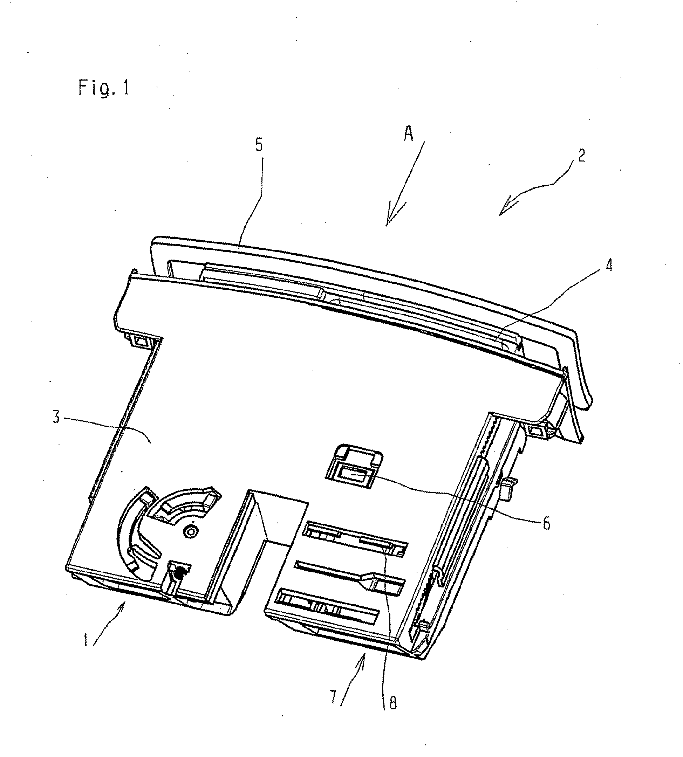

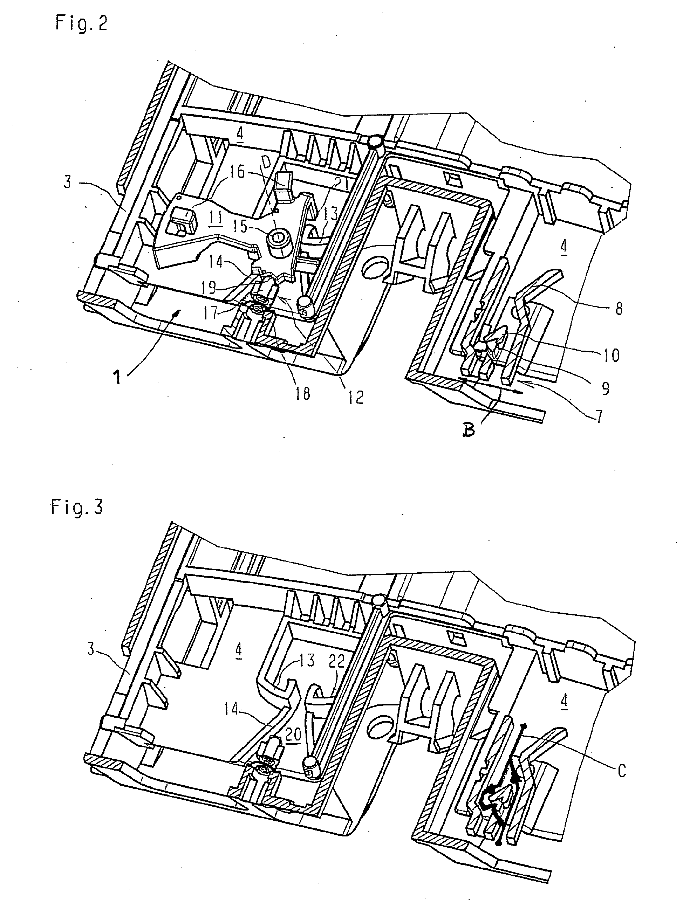

Die in den Figuren 1 bis 5 dargestellte erfindungsgemäße Sicherheitsverriegelungsmechanik 1 ist Teil eines Aschers 2 für ein Kraftfahrzeug. Figur 1 zeigt den gesamten Ascher 2. Er besteht insbesondere aus einem Gehäuse 3, aus dem als Behältnis 4 eine Schublade mit einer Bedienblende 5 zum Öffnen und Schließen hinein- und herausschiebbar ist. Das Behältnis 4 kann beispielsweise einen Anzünder und eine herausnehmbare Aufnahmeschale für Asche aufweisen. Der Ascher 2 wird mit seinem Gehäuse 3 in einen Aufnahmeschacht eines Kraftfahrzeugs eingebaut, so dass für den Bediener lediglich die Bedienblende 5 und im geöffneten Zustand das Behältnis 4 zugänglich ist. Sowohl das Schließen als auch das Öffnen des Behältnisses 4 erfolgt über das Drücken der Bedienblende 5 entsprechend Pfeil A. Um dies zu ermöglichen, weist der Ascher 2 eine Rollfeder 6 und eine Push-Push-Verriegelungsmechanik 7 auf. Die Rollfeder ist einerseits am Gehäuse 3 und andererseits am Behältnis 4 befestigt und übt eine dem Schließen entgegen wirkende Kraft aus. Die Push-Push-Verriegelungsmechanik 7 sorgt für eine Verriegelung beim Schließen des Behältnisses 4 sowie für ein Entriegeln bei leichtem Druck auf die Bedienblende 5 zum Öffnen. Sie besteht aus einem im Gehäuse 3 verschiebbar gelagerten Schieber 8 sowie einen am Behältnis angeordneten Zapfen 9 (siehe Figuren 2 bis 5).

Figur 2 zeigt vergrößert den Bereich der Sicherheitsverriegelungsmechanik 1 sowie der Push-Push-Verriegelungsmechanik 7, wobei das Gehäuse 3 oben aufgeschnitten ist und vom Behältnis 4 nur der hintere, dem Bediener nicht zugängliche Teil dargestellt ist. Auch der Schieber 8, der entsprechend Doppelpfeil B verschoben werden kann, ist geschnitten dargestellt. Da sich das Behältnis 4 in geschlossener Stellung befindet, liegt der Zapfen 9 der Push-Push-Verriegelungsmechanik 7 am sog. Herz 10 des Schiebers 8 an. Figur 3 zeigt mit der Kontur C den Weg des Zapfens 9 relativ zum Schieber 8 während eines Öffnens und Schließens des Behältnisses 4. Die Sicherheitsverriegelungsmechanik 1 besteht aus der Masse 11, der Rasteinrichtung 12 sowie der ersten und zweiten Rückstelleinrichtungen 13 und 14. Diese werden in Figur 3 deutlich, in der zur besseren Übersicht die Masse 11 nicht dargestellt ist. Die Masse 11 ist im Gehäuse 3 drehbar um die Achse D gelagert. Hierzu dient der Lagerbolzen 15 sowie die beiden Lagerkrallen 16 als Führung. Aufgrund der Rasteinrichtung 12, die durch den Rastbolzen 17, die Rastfeder 18 sowie die Rastkerben 19 an der Masse 11 gebildet ist, bleibt die Masse 11 bei normalem Fahrbetrieb stets in der hier dargestellten Grundstellung. Aufgrund der Ausnehmung 20 (Figur 3) in den Konturen des Behältnisses 4 kann das Behältnis 4 geöffnet und geschlossen werden, ohne die Masse 11 im Bereich der Haltekralle 21 zu berühren.

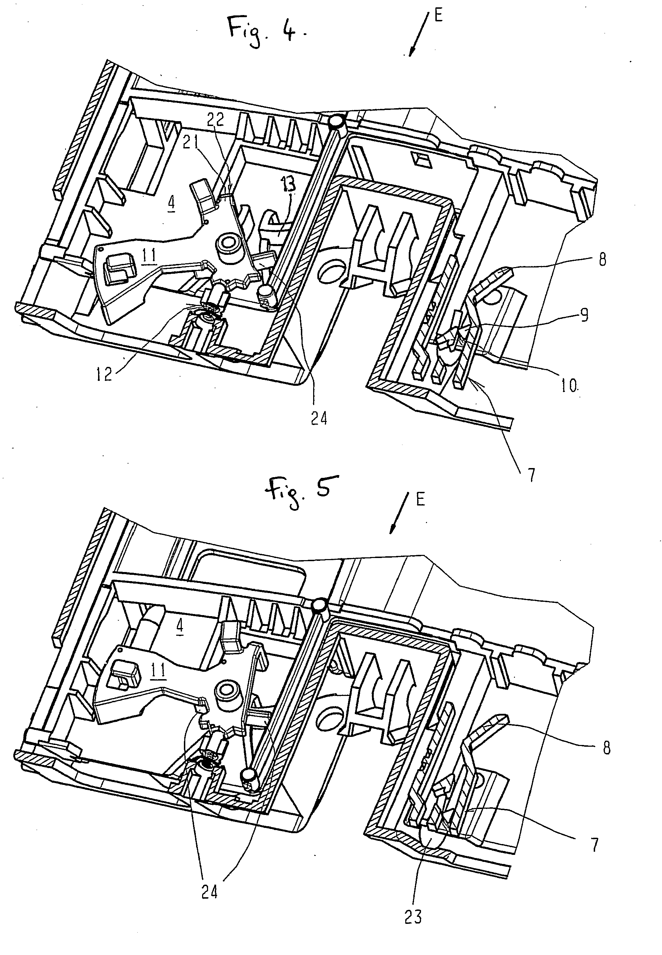

Figur 4 zeigt den gleichen Bereich des Ascher 2 nach einem starken Beschleunigungsvorgang in Richtung des Pfeils E, beispielsweise in Folge eines Unfalls. Da der Schwerpunkt der Masse 11 exzentrisch zur Achse D angeordnet ist, wirkt auf die Masse 11 bei starken Beschleunigungsvorgängen ein solch starkes Moment, dass die Haltekräfte der Rasteinrichtung 12 überwunden werden und die Masse 11 in die hier dargestellte ausgelenkte Stellung verdreht wird. Hierdurch gelangt die Haltekralle 21 in den Bereich der Hinterschneidung 22 (siehe auch Figur 3) des Behältnisses 4 und verhindert hierdurch, dass sich dieses aufgrund der Rollfeder 6 (siehe Figur 1) öffnet. Auf diese Weise bleibt das Behältnis 4 zumindest weitgehend geschlossen, was das Verletzungsrisiko im Fahrgastraum gegenüber einem geöffneten Ascher deutlich vermindert. Die Push-Push-Verriegelungsmechanik 7 kann dies nicht leisten. Durch den starken Beschleunigungsvorgang wird das Behältnis etwas in Richtung des Pfeils E bewegt, was der Bewegung bei leichtem Druck auf die Bedienblende 5 (siehe Figur 1) zum Öffnen des Behältnisses 4 entspricht. Der Zapfen 9 wird hierdurch aus dem Herz 10 gelöst, verschiebt den Schieber 8 und findet in der Folge keinen Halt mehr an diesem.

Zum Lösen der Sicherheitsverriegelungsmechanik 1 drückt der Bediener das Behältnis 4 an der Bedienblende 5 (siehe Figur 1) entsprechend Figur 5 in Richtung des Pfeils E etwas über. Dieses Überdrücken erfolgt entgegen der Wirkung des Dämpfungselements 23. Dieses verursacht eine Kraft die bei steigender Geschwindigkeit überproportional steigt, d. h. bei schnellen, kurzen Bewegungen - wie während eines Unfalls - wird es sehr "hart" und verhindert hierdurch ein Überdrücken, während es bei langsamen Bewegungen - wie beim langsamen Überdrücken durch den Bediener - "weich" bleibt. Das Überdrücken des Behältnisses 4 hat zur Folge, dass die Masse 11 durch die erste Rückstelleinrichtung 13 die dargestellte Grundstellung erreicht. Dies wird dadurch erreicht, dass die Masse 11 eine Rückstellrippe 24 aufweist, die mit der Kontur der ersten Rückstelleinrichtung 13 beim Überdrücken des Behältnisses 4 in Kontakt kommt und hierdurch ein Rückstellmoment bewirkt. Der Schieber 8 der Push-Push-Verriegelungsmechanik 7 wird während dieses Vorgangs nicht bewegt, so dass im Weiteren das Behältnis geöffnet werden kann.

Wie aus den Figuren 4 und 5 deutlich wird, erfüllt die Sicherheitsverriegelungsmechanik 1 ihre Funktion sowohl bei starken Beschleunigungen in Richtung des Pfeils E als auch in entgegengesetzter Richtung, d. h. beispielsweise sowohl bei einem Front- als auch bei einem Heckaufprall. Für den Fall einer Beschleunigung entgegen der Richtung von Pfeil E hat die Verriegelung lediglich die Bedeutung einer zusätzlichen Sicherung, da in diesem Fall die Push-Push-Verriegelungsmechanik 7 selbst eine Verriegelung des Behältnisses 4 bewirkt. Diese Verriegelung gewährleistet jedoch aufgrund der kleinen Strukturen häufig keine ausreichende Stabilität, so dass eine zusätzliche Sicherung sinnvoll ist.

Für den Fall, dass der Ascher zum Zeitpunkt eines Unfalls geöffnet ist und eine starke Beschleunigung in Richtung des Pfeils E auftritt, wird das Behältnis wie bei der manuellen Bedienung geschlossen und dabei von der Push-Push-Verriegelungsmechanik 7 verriegelt. Da die Masse 11 durch die Beschleunigung ausgelenkt wird, ist es wichtig, dass vor Erreichen der geschlossenen Stellung eine vor der Hinterschneidung 22 (siehe Figur 3) angeordnete Fläche nicht auf die Haltekralle 21 prallt. Hierfür sorgt die zweite Rückstelleinrichtung 14 (siehe Figur 3), deren Kontur dafür sorgt, dass die Haltekralle 21 in Richtung der Ausnehmung 20 gedrückt wird und somit die Masse wieder in die Grundstellung gelangt.

## Patentansprüche

1. Sicherheitsverriegelungsmechanik (1) für ein Behältnis (4) in einem Fahrzeug, wobei das Behältnis (4) zwischen einer geöffneten und einer geschlossenen Stellung hin und her bewegbar ist, und wobei die Sicherheitsverriegelungsmechanik (1) eine Masse (11) aufweist, die mit einer Führung (15, 16) aus einer Grundstellung in eine ausgelenkte Stellung beweglich geführt ist, wobei die Masse (11) das Behältnis (4) verschlossen hält, wenn die Masse (11) in die ausgelenkte Stellung bewegt ist, und mit einer Einrichtung (12), die die Masse (11) in der Grundstellung hält, wenn keine Beschleunigung oder Verzögerung in Auslenkungsrichtung auf die Masse (11) einwirkt, **dadurch gekennzeichnet, dass** die Sicherheitsverriegelungsmechanik (1) eine Rasteinrichtung (12), die die Masse (11) in der ausgelenkten Stellung hält, und eine durch Überdrücken des Behältnisses (4) wirkende Rückstelleinrichtung (13), die die Masse (11) in die Grundstellung lenkt, aufweist.

2. Sicherheitsverriegelungsmechanik nach Anspruch 1, **dadurch gekennzeichnet, dass** dem Überdrücken des Behältnisses (4) ein Dämpfungselement (23) entgegen wirkt.

3. Sicherheitsverriegelungsmechanik nach Anspruch 2, **dadurch gekennzeichnet, dass** die Kennlinie des Dämpfungselements (23) derart ist, dass bei steigender Geschwindigkeit eine überproportionale dämpfende Kraft auftritt.

4. Sicherheitsverriegelungsmechanik nach Anspruch 1, **dadurch gekennzeichnet, dass** die Masse (11) in zwei entgegengesetzte Richtungen auslenkbar ist, in jeder ausgelenkten Stellung von der Rasteinrichtung (12) gehalten wird, in jeder ausgelenkten Stellung das Behältnis (4) verschlossen hält und durch Überdrücken des Behältnisses (4) von der Rückstelleinrichtung (13) in die Grundstellung gelenkt wird.

5. Sicherheitsverriegelungsmechanik nach Anspruch 1, **dadurch gekennzeichnet, dass** die Sicherheitsverriegelungsmechanik (1) eine durch Bewegen des Behältnisses (4) von der offenen in die geschlossenen Stellung wirkende zweite Rückstelleinrichtung (14) aufweist.

## Claims

1. Safety locking mechanism (1) for a receptacle (4) in a vehicle, the receptacle (4) being movable back and forth between an opened and a closed position, and the safety locking mechanism (1) comprising a mass (11), which is movably guided by a guide means (15, 16) from a basic position into a deflected position, wherein the mass (11) holds the receptacle (4) closed when the mass (11) is moved into the deflected position, and having a device (12) which holds the mass (11) in the basic position when no acceleration or deceleration acts in the deflection direction on the mass (11), **characterised in that** the safety locking mechanism (1) comprises an engaging device (12), which holds the mass (11) in the deflected position, and a restoring device (13), effective by applying an overpressure to the receptacle (4), which directs the mass (11) into the basic position.

2. Safety locking mechanism according to claim 1, **characterised in that** a damping element (23) acts against the application of an overpressure to the receptacle (4).

3. Safety locking mechanism according to claim 2, **characterised in that** the characteristic of the damping element (23) is such that as speed increases a superproportionate damping force occurs.

4. Safety locking mechanism according to claim 1, **characterised in that** the mass (11) is deflectable in two opposing directions, is held in each deflected position by the engaging device (12), holds the receptacle (4) closed in each deflected position and is directed by the restoring device (13) into the basic position when an overpressure is applied to the receptacle (4).

5. Safety locking mechanism according to claim 1, **characterised in that** the safety locking mechanism (1) comprises a second restoring device (14) effective by movement of the receptacle (4) from the open into the closed position.

## Revendications

1. Mécanisme (1) de verrouillage de sécurité pour un contenant (4) dans un véhicule, sachant que le contenant (4) peut être déplacé en va-et-vient entre une position ouverte et une position fermée, et sachant que le mécanisme (1) de verrouillage de sécurité présente une masse (11) qui, par un guide (15, 16), est guidée à déplacement d'une position de base dans une position déviée, la masse (11) maintenant le contenant (4) fermé lorsqu'elle est déplacée dans la position déviée, et avec un organe (12) qui maintient la masse (11) dans la position de base lorsqu'aucune accélération ou décélération n'agit sur la masse (11) dans la direction de déviation, **caractérisé en ce que** le mécanisme (1) de verrouillage de sécurité présente un organe de crantage (12) qui maintient la masse (11) dans la position déviée, et un organe de rappel (13) qui agit par sur-enfoncement ou sur-pression du contenant (4) et dirige la masse (11) dans la position de base.

2. Mécanisme de verrouillage de sécurité selon la revendication 1, **caractérisé en ce qu'**un élément d'amortissement (23) s'oppose à la sur-pression du contenant (4).

3. Mécanisme de verrouillage de sécurité selon la revendication 2, **caractérisé en ce que** la courbe caractéristique de l'élément d'amortissement (23) est telle qu'on obtient une force d'amortissement surproportionnelle lorsque la vitesse augmente.

4. Mécanisme de verrouillage de sécurité selon la revendication 1, **caractérisé en ce que** la masse (11) peut être déviée dans deux directions opposées, est maintenue par l'organe de crantage (12) dans chaque position déviée, maintient le contenant (4) fermé dans chaque position déviée, et est dirigée dans la position de base par l'organe de rappel (13) par sur-pression du contenant (4).

5. Mécanisme de verrouillage de sécurité selon la revendication 1, **caractérisé en ce que** le mécanisme (1) de verrouillage de sécurité présente un deuxième organe de rappel (14) agissant par déplacement du contenant (4) de la position ouverte dans la position fermée.
